# EUROPEAN PATENT SPECIFICATION

(11) **EP 4 305 866 B1**
(45) Date of publication and mention of the grant of the patent: **27.11.2024**
(21) Application number: 21712451.0
(22) Date of filing: 11.03.2021
(51) Int. Cl.: H04W 16/14, G01S 7/02, G01S 7/00, G01S 13/88, H04W 48/02, H04W 84/04, H04W 88/06

(54) **COEXISTENCE BETWEEN COMMUNICATIONS IN A MOBILE COMMUNICATIONS SYSTEM AND A RADAR APPLICATION**
KOEXISTENZ ZWISCHEN KOMMUNIKATION IN EINEM MOBILKOMMUNIKATIONSSYSTEM UND EINER RADARANWENDUNG
COEXISTENCE ENTRE DES COMMUNICATIONS DANS UN SYSTÈME DE COMMUNICATION MOBILE ET UNE APPLICATION RADAR

(43) Date of publication of application: 17.01.2024
(73) Proprietor: Telefonaktiebolaget LM Ericsson (publ), 164 83 Stockholm (SE)
(72) Inventor: SANDGREN, Magnus, 245 44 Staffanstorp (SE); KALANTARI, Ashkan, 211 27 Malmö (SE); REIAL, Andres, 234 40 Lomma (SE); ZOU, Gang, 226 49 Lund (SE); SJÖLAND, Henrik, 224 68 Lund (SE)
(74) Representative: Ericsson
(86) International application number: PCT/EP2021/056194
(87) International publication number: WO 2022/188980

(56) References cited:
- WO-A1-2021/028057
- US-A1- 2015 063 146

## Description

### BACKGROUND

The present invention relates to technology that enables a mobile communication device to carry out a radar application with little to no interference to communications being carried out in a mobile communication system in which the mobile communication device is operating.

There is a need for applications in mobile phones and other modem-equipped devices to be aware of objects and events in their surroundings. These needs can be at least partly satisfied by means of radar sensing. Moreover, information derived from radar sensing may be combined (e.g., as in sensor fusion) with data from other sensors (e.g., cameras) to provide an even greater understanding of the device's operating environment.

Radar functionality can be integrated into a communication device such as 3GPP phone (herein denoted as "user equipment", or more simply, "UE") either by using the device's radiofrequency (RF) transceiver as a radar transmitter/receiver or by equipping the device with a dedicated radar transceiver. However, equipping a device to utilize radar in a region served by a mobile communication system presents a problem because a radar signal generally occupies a wide frequency bandwidth such that the radar signal's presence may introduce RF interference towards the base station (BS) or the device's neighboring UEs.

The work described in International Patent Application Publication No. WO2019/233830 A1, December 2019 (E. Bengtsson, "Coexistence of Radar Probing and Wireless Communication), considers the use of beam sweeping to identify one or more beams for wireless communication between two devices. In addition, it includes radar probing in directions based on one or more beam sweeps. The technology checks whether the wireless device can probe with spatial restriction or not. The UE measures the spectral power levels on various beams to avoid interference between communication and radar probing. Radar probing restrictions can be imposed with respect to one or more of power level, time, frequency, and spatial direction.

US Patent No. 10,439,743 B2, issued in October 2019 to M.I.T. Vargas et al ("System, Method, and Apparatus for Managing Co-Channel Interference") describes an approach for managing the interference between two fixed wireless links or a fixed wireless link and a radio access network (RAN). This work proposes the use of coordination between the nodes to sense the interference when there is no communication. One use case can be the coexistence of 5G and fixed wireless services.

U.S. Patent Application Publication No. US 2018/0199377, published on July 2018 (A. Sanderovich et al. "Co-Existence Of Millimeter Wave Communication And Radar"), discusses radar and communication coexistence, and for this purpose discusses reserving the channel, or sending the radar signal when there is no communication.

In another paradigm, U.S. Patent Application Publication No. US2019/0293781 published in September 2019 (T. Bolin et al.) proposes using orthogonal resources for simultaneous radar and data communication. The publication mentions that the resource elements can be frequency, time, spatial dimension, or code dimension. Patent application WO2021/028057 A discloses a method to determine a radar allocation in a wireless communication system in order to avoid interference between radar operation and the wireless communication system.

There is therefore a need for technology that addresses the above described and/or related problems.

### SUMMARY

It should be emphasized that the terms "comprises" and "comprising", when used in this specification, are taken to specify the presence of stated features, integers, steps or components; but the use of these terms does not preclude the presence or addition of one or more other features, integers, steps, components or groups thereof.

Moreover, reference letters may be provided in some instances (e.g., in the claims and summary) to facilitate identification of various steps and/or elements. However, the use of reference letters is not intended to impute or suggest that the so-referenced steps and/or elements are to be performed or operated in any particular order.

In accordance with one aspect of the present invention, the foregoing and other objects are achieved in technology (e.g., methods, apparatuses, nontransitory computer readable storage media, program means) that performs a radar sensing function in a mobile communication device that operates in a Time Division Duplex (TDD) wireless communication system having an air interface that comprises a plurality of uplink symbol times associated with symbols transmitted in an uplink direction and a plurality of downlink symbol times associated with symbols transmitted in a downlink direction, and in which each transmitted symbol from a plurality of transmitted symbols has a corresponding cyclic prefix that is transmitted immediately before the corresponding transmitted symbol, and that is a repetition of an end part of the corresponding transmitted symbol. Information about a path delay between the mobile communication device and a receiver is used as one of one or more bases to determine a timing of a radar operation window having a duration that is shorter than a duration of a cyclic reception window of the receiver and comprising a radar signal transmission time and a radar backscatter reception period. The determined timing of the radar operation window is configured to cause the radar signal, when transmitted from the mobile communication device at the determined radar signal transmission time, to arrive at the receiver during a portion of the cyclic prefix reception window of the receiver. The radar signal is transmitted at the determined radar signal transmission time.

In another aspect of some but not necessarily all embodiments consistent with the invention, determining the timing of the radar operation window comprises using an uncertainty associated with the information about the path delay as one of the bases to determine the timing of the radar operation window.

In yet another aspect of some but not necessarily all embodiments consistent with the invention, a transmission power of the radar signal is adjusted based on a radar transmission timing uncertainty.

In still another aspect of some but not necessarily all embodiments consistent with the invention, determining the timing of the radar operation window comprises using an uncertainty associated with a placement of the cyclic prefix reception window of the receiver or of a symbol reception window of the receiver.

In another aspect of some but not necessarily all embodiments consistent with the invention, determining the timing of the radar operation window comprises using information about a level of multi-path delay spread experienced at the receiver as one of the bases to determine the timing of the radar operation window.

In yet another aspect of some but not necessarily all embodiments consistent with the invention, transmission power of the radar signal is adjusted based on the level of radar signal multi-path delay spread at the receiver.

In still another aspect of some but not necessarily all embodiments consistent with the invention, the receiver is a network node receiver and the determined time causes the transmitted radar signal to arrive during the portion of the cyclic prefix reception window of the network node receiver.

In yet another aspect of some but not necessarily all embodiments consistent with the invention, it is detected that a power level to be applied when transmitting the radar signal is above a threshold power level associated with an automatic gain control process of the receiver, and in response to the detecting, one or more mitigating actions are performed to mitigate an effect that transmitting the radar signal would have on the automatic gain control process of the receiver.

In another aspect of some but not necessarily all embodiments consistent with the invention, determining the timing of the radar operation window comprises obtaining information about a timing of a symbol reception window at the receiver; and deriving the timing of the radar operation window and a length of the radar operation window from the received information about the timing of the symbol reception window at the receiver and one or more values of timing uncertainty about a beginning portion of the cyclic prefix reception window of the receiver and an end portion of the cyclic prefix reception window of the receiver.

In yet another aspect of some but not necessarily all embodiments consistent with the invention, network-provided information about radio resources of one or more other mobile communication devices is used to determine a radar signal filter that will mitigate interference from the one or more other mobile communication devices when a backscatter signal of the radar signal is received.

In still another aspect of some but not necessarily all embodiments consistent with the invention, a mobile communication device timing capability level is reported to a network node.

In another aspect of some but not necessarily all embodiments consistent with the invention, a length of the radar operation window in proportion to a level of timing accuracy of the mobile communication device is determined.

In yet another aspect of some but not necessarily all embodiments consistent with the invention, the receiver is a receiver of another mobile communication device and the determined time causes the transmitted radar signal to arrive during the portion of the cyclic prefix reception window of said another mobile communication device.

In still another aspect of some but not necessarily all embodiments consistent with the invention, a value of downlink propagation delay from a network node to said another mobile communication device and a value of radar propagation delay between the mobile communication device and said another mobile communication device are used as at least two bases to determine the timing of the radar operation window.

In another aspect of some but not necessarily all embodiments consistent with the invention, a level of radar signal transmission power is used as one of said bases to determine the timing of the radar operation window.

In yet another aspect of some but not necessarily all embodiments consistent with the invention, a transmission power level of the transmitted radar signal is adjusted in dependence on a radar propagation delay between the mobile communication device and said another mobile communication device.

In still another aspect of some but not necessarily all embodiments consistent with the invention, a value of downlink propagation delay from the network node to the mobile communication device is used as the value of downlink propagation delay from the network node to said another mobile communication device.

In another aspect of some but not necessarily all embodiments consistent with the invention, the value of downlink propagation delay from the network node to said another mobile communication device is obtained from said another mobile communication device.

In yet another aspect of some but not necessarily all embodiments consistent with the invention, the value of downlink propagation delay from the network node to said another mobile communication device is obtained from the network node.

In still another aspect of some but not necessarily all embodiments consistent with the invention, a direction of a transmission beam is tuned based on a timing of a downlink cyclic prefix period of said another mobile communication device.

In another aspect of some but not necessarily all embodiments consistent with the invention, determining the timing of the radar operation window comprises selecting a cyclic prefix transmission window of a symbol transmitted by a network node during one of the downlink time slots when a radar surveillance range is below a predetermined distance threshold; and selecting a cyclic prefix reception window of a symbol received by the network node during one of the uplink time slots when the radar surveillance range is above the predetermined distance threshold.

In yet another aspect of some but not necessarily all embodiments consistent with the invention, an instruction that prohibits performance of a radar operation is received from a network node.

### BRIEF DESCRIPTION OF THE DRAWINGS

The objects and advantages of the invention will be understood by reading the following detailed description in conjunction with the drawings in which:
Figure 1A illustrates a situation in which a radar enabled mobile communication device operates in the vicinity of two other mobile communication devices, with all three being served by a base station.
Figure 1B is a chart showing the relationship between subcarrier spacing and cyclic prefix during uplink TDD operation, as defined by the 3GPP NR standards.
Figure 1C illustrates some of the timing aspects that are relevant to the herein-described technology.
Figure 2 illustrates how timing error margins can be applied to the radar signal timing in order to avoid overlapping with the uplink transmission of another mobile communication device.
Figure 3 is, in one respect, a flowchart of actions performed by the system in accordance with a number of embodiments consistent with the invention.
Figure 4 is a signaling diagram illustrating how a radar enabled mobile communication device interacts with a base station with respect to a radar operation.
Figure 5A depicts a radar enabled mobile communication device in a cell that also includes first and second other communication devices, with all three of the devices being served by a base station.
Figure 5B is a chart showing the relationship between subcarrier spacing and cyclic prefix during downlink TDD operation, as defined by the 3GPP NR standards.
Figure 5C illustrates some of the timing aspects that are relevant to the herein-described technology with respect to radar operation during the downlink phase of TDD operation.
Figure 6 is a timing diagram showing how timing error margins can be applied to the radar signal timing in order to avoid overlapping with the downlink transmission of the base station when received by another mobile communication device.
Figure 7 is, in one respect, a flowchart of actions performed by a radar enabled mobile communication device in accordance with a number of embodiments consistent with the invention.
Figure 8 is a block diagram of an exemplary controller of a system in accordance with some but not necessarily all exemplary embodiments consistent with the invention.

### DETAILED DESCRIPTION

The various features of the invention will now be described with reference to the figures, in which like parts are identified with the same reference characters.

The various aspects of the invention will now be described in greater detail in connection with a number of exemplary embodiments. To facilitate an understanding of the invention, many aspects of the invention are described in terms of sequences of actions to be performed by elements of a computer system or other hardware capable of executing programmed instructions. It will be recognized that in each of the embodiments, the various actions could be performed by specialized circuits (e.g., analog and/or discrete logic gates interconnected to perform a specialized function), by one or more processors programmed with a suitable set of instructions, or by a combination of both. The term "circuitry configured to" perform one or more described actions is used herein to refer to any such embodiment (i.e., one or more specialized circuits alone, one or more programmed processors, or any combination of these). Moreover, the invention can additionally be considered to be embodied entirely within any form of nontransitory computer readable carrier, such as solid-state memory, magnetic disk, or optical disk containing an appropriate set of computer instructions that would cause a processor to carry out the techniques described herein. Thus, the various aspects of the invention may be embodied in many different forms, and all such forms are contemplated to be within the scope of the invention. For each of the various aspects of the invention, any such form of embodiments as described above may be referred to herein as "logic configured to" perform a described action, or alternatively as "logic that" performs a described action.

An aspect of the herein-described technology pertains to coexistence between radar operations and communication within a shared geographical region.

In an aspect of embodiments consistent with an aspect of some embodiments consistent with the invention, a framework is provided in which a UE times transmission of a radar signal based on a cyclic prefix period of an Orthogonal Frequency Division Multiplexed (OFDM) symbol.

In a further aspect of some but not necessarily all embodiments consistent with the invention, improved coexistence between 5G New Radio (NR) technology and radar signals during these communication phases is achieved by providing different frameworks for respective uplink and downlink cyclic prefix periods.

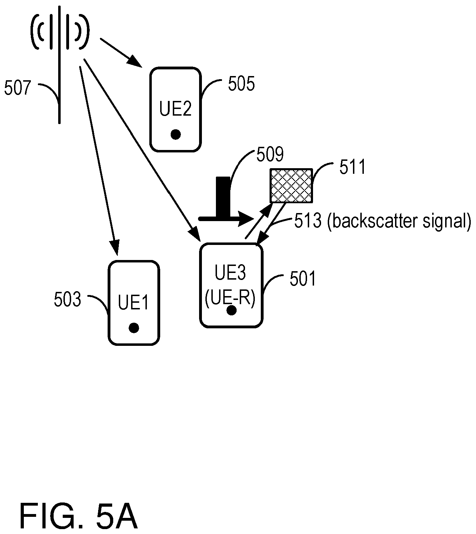

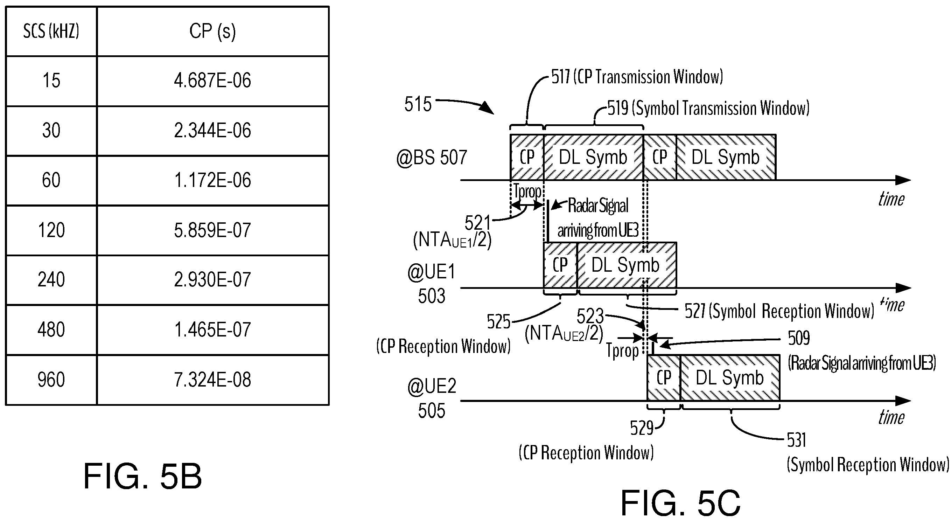

These and other aspects will now be described in greater detail in connection with the figures. 5GNR uses the mmWave frequencies (i.e., Frequency Range 2 (FR2), which includes frequency bands from 24.25 GHz to 52.6 GHz), in Time Division Duplex (TDD) mode for communication. Although using this frequency range opens a wide spectrum, it is highly susceptible to blockage and attenuation. Hence, the UE and BS need to select suitable communication beams in order to ensure reliable communications.

UEs can also use the mmWave frequencies to transmit radar signals. However, depending on whether the radar system is operating in the uplink or downlink phases of the TDD communication protocol, this may cause interference toward the BS (uplink) or toward other UEs (downlink). As used herein, the term "radar-enabled UE (abbreviated as "UE-R") is used to denote a UE with radar capability.

The radar operation of the UE may cause interference in the following phases of the mmWave TDD:
1. Radar operation during uplink phase of TDD: The radar-enabled UE transmits radar signals that may interfere with the uplink signals of other UEs (e.g., control/data/Sounding Reference Symbols (SRS)) when they arrive at the BS during the uplink phase of mmWave TDD.
2. Radar operation during downlink phase of TDD: The radar-enabled UE transmits radar signals that may interfere with the downlink signal sent by the BS toward the surrounding UEs during the downlink phase of TDD. The level of interference experienced by any one of these other UEs depends on the RF pathloss and beam direction between the radar-enabled UE and the other UEs. Depending on the distance and orientation of other UEs, the radar-enabled UE may mitigate this interference by changing the transmit power, direction and/or duration of the radar signal adaptively.

If the radar operation is ill-timed, its simultaneous use of allocated time/frequency resources of the communicating system can interfere with it. Accordingly, in an aspect of embodiments consistent with the invention, the radar enabled-UE can sense the environment during a suitable portion of a cyclic prefix (CP) segment of the OFDM symbols that avoids the radar and communication interfering in time. The following discussion discloses techniques for placing the radar sensing within suitable portions of the CP period of the uplink and downlink OFDM symbols that avoid radar and communication interference without compromising the inter-symbol interference (ISI) mitigation function of the CP for communicating UEs.

Using the CP period for radar sensing in this manner reduces the likelihood of interference to the uplink (UL) receiver in the absence of reserved dedicated resources, and therefore enables radar operation while efficiently using the available radio spectrum. Similar improvements are achieved with respect to downlink (DL) receivers of other devices when radar operation is performed during a DL phase of TDD operation.

The discussion will now focus on embodiments in which radar operation is performed during UL transmission times of TDD.

When communications take place on a non-dispersive communication channel, the cyclic prefix (CP) is redundant, and is therefore discarded by the UL receiver (e.g., a base station receiver). For lightly or more dispersive channels, the CP fulfills an intersymbol interference (ISI) mitigation function and provides error robustness with respect to inaccuracies in the timing advance (TA) estimation of the BS and in the transmit timing execution at the UE. In NR-compliant systems, the length of the CP depends on Sub Carrier Spacing (SCS) being used and is shorter at mmWave. Certain first symbols in a regular communication slot have a longer CP period compared to other symbols and are more favorable for radar sensing, although use of these particular CP periods is not an essential aspect of inventive embodiments. This opens an opportunity to perform radar sensing during a CP period. In one embodiment, when a BS finds its UL multi-path delay spread is below a certain threshold (meaning that a sufficient portion of the received CP will represent redundant information and be discarded anyway), it may inform radar enabled UEs under its coverage about the possibility of using the CP associated with an UL symbol for radar sensing.

The uplink timing estimates are imperfect due to errors in the TA control loop and in the UE's transmit timing. The CP covers this and includes an extra margin for channel delay spread. When the channel is more dispersive, it becomes more difficult to estimate the correct starting time of the symbol and the BS may capture a part of the CP in order to be able to decode the received symbol. But this still leaves part of the CP available for radar sensing. The BS knows the available period and can inform the radar-enabled UE. It is noted that an extended CP has been used in earlier systems (e.g., for MBSFN) but in NR systems is only defined for at 60kHz SCS and comes with overhead.

The network can use the uplink timing measurements of UL communication signals from the radar-enabled UE and/or of the received radar transmission from the radar-enabled UE and the TA control loop to guide the radar-enabled UE to time transmission of the radar signal so that the BS receives the radar transmission at an uplink timing that is within the cyclic prefix (CP) of the OFDM symbol and outside the BS assigned reception window. In some but not necessarily all embodiments consistent with the invention, further mitigation of interference can be achieved by having the network allocate time/frequency and spatial resources for use by radar sensing during uplink and downlink phases of TDD operation.

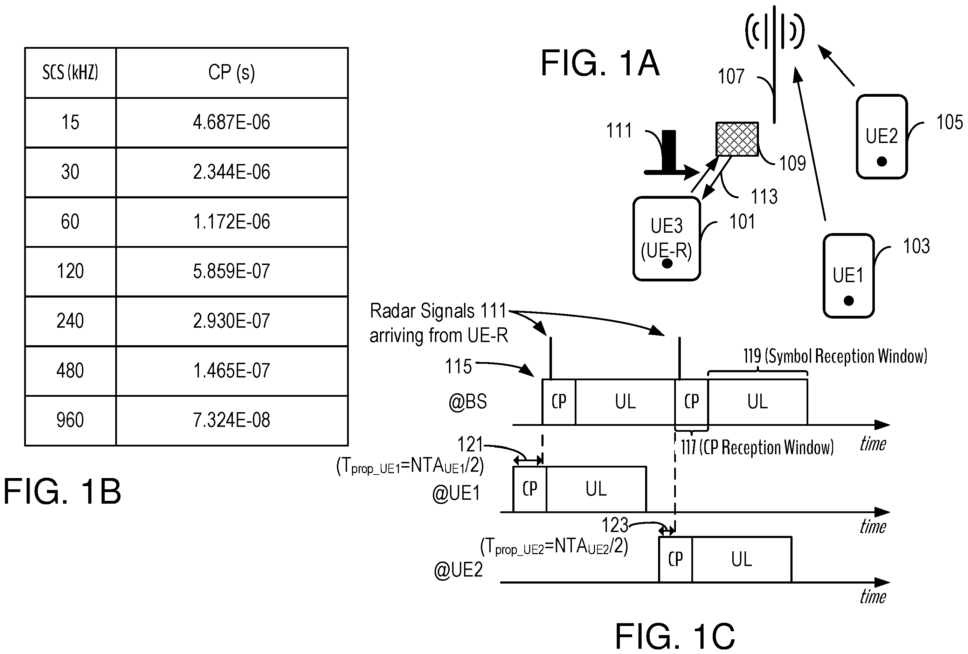

This aspect of inventive embodiments is now described in further detail with reference first to Figures 1A, 1B, and 1C. Figure 1A illustrates a situation in which a UE-R 101 operates in the vicinity of two other UEs 103, 105, with all three being served by a base station 107. The UE-R 101 performs a radar operation to sense its environment, which in this example includes an object 109. The radar operation includes transmission of a radar pulse 111 and receipt of a backscatter signal 113.

It is desired to transmit the radar pulse 111 at a time such that it will arrive at the base station 107 within the cyclic prefix (CP) of an OFDM symbol and outside the BS's assigned reception window for the OFDM symbol. The amount of time available for the transmission is therefore related to the length of the CP which varies in dependence on the SCS being used. Figure 1B is a chart showing the relationship between SCS and CP length, as defined by the 3GPP NR standards.

Figure 1C illustrates some of the timing aspects that are relevant to the herein-described technology. Taking the arrangement of devices as shown in Figure 1A as an example, the base station 107 has an uplink timing configuration 115 as shown, in which each CP reception window 117 is immediately followed by an associated symbol reception window 119. In order to have each UE's uplink transmissions of CP followed by associated symbol arrive at the base station 107 within the base station's allocated CP and symbol reception windows 117, 119 the propagation delay between each UE and the base station 107 is taken into account in the form of a Timing Advance (TA) value, which specifies how far in advance of the base station's timing (as observed at the UE) the signal needs to be transmitted to arrive essentially on time. As mentioned above and discussed further below, the UE's transmissions may not perfectly align with the base station's CP and symbol reception windows 117, 119 even when TA is applied (e.g., due to errors in the TA control loop and drift that occurs in-between update occasions), and the length of the CP is large enough to account for these errors during communication. But ignoring these additional factors for the moment, it can be seen that the UE1's 103 distance from the base station 107 is greater than that of the UE2's 105. Consequently, the TA 121 of the UE1 103 is greater than the TA 123 of the UE2 105.

Given the arrangement of Figure 1C, embodiments consistent with the invention are configured to have the UE-R's 101 radar pulses/signals 111 transmitted at a time such that, as illustrated in Figure 1C, those signals will arrive at the base station 107 within the CP reception window 117 of an OFDM symbol and outside the reception window 119 for the OFDM symbol.

As Figure 1C illustrates, for any given UE, placement of the radar signal 111 within the base station's CP reception window 117 is dependent, at least in part, on that UE's timing advance value. The same is true for the UE-R 101 as well, which means that a UE-R 101 operated to perform sensing during the base station's uplink CP reception window 117 can use its own TA estimate as an indication of the BS receiver-aligned CP reception window location, since the timing at the BS serves as the master timing for all UEs. The UE-R 101 can receive information from the BS to obtain knowledge of the actual BS assigned reception window.

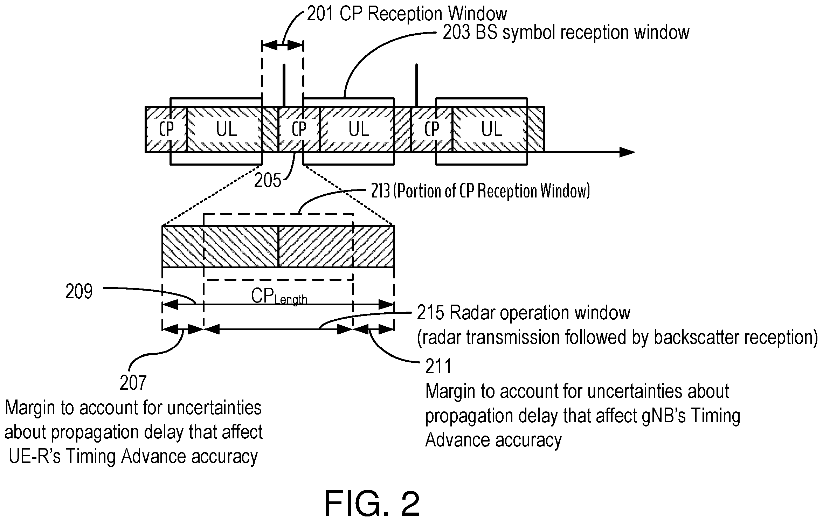

In another aspect of some but not necessarily all embodiments consistent with the invention, the technology is further configured to account for errors in timing as well as in timing advance estimates. As shown in Figure 2, corresponding timing error margins can be applied to the radar signal timing in order to avoid overlapping with the uplink transmission of another UE. In particular, consider a BS's CP reception window 201 followed by a symbol reception window 203 (both occurring during the uplink phase of TDD operation). Due to timing estimation errors and channel characteristics the CP and symbol reception windows 201, 203 may not exactly align with the BS's ideal CP and symbol reception timing. To illustrate this point, the symbol reception window 203 includes a part of the received CP 205. Thus, the end portion of the CP 205 is actually received during a beginning part of the symbol reception window 203 and is not available for radar transmission. If the UE had transmitted a radar signal with the expectation that it would be received during an end portion of the CP reception window, that signal would then actually arrive during the beginning part of the symbol reception window 203.

It is advantageous to further provide a margin 207 at the beginning of the CP's length 209 and a margin 211 at the end of the CP's length 209 to account for uncertainties about propagation delay that affect the UE-R's TA accuracy and timing uncertainties at the UE-R 101. Avoiding transmission of the radar signal during the two margins 207 and 211 leaves a portion of the CP reception window 213 usable as a radar operation window 215 during which the radar operation (i.e., transmission of the radar signal and reception of the backscatter signal) should be performed.

Accordingly, the radar operation window 215 is, in some embodiments, advantageously designed based on the following factors:
1. The time position of the unused reception time window within a total CP duration 209 between two adjacent symbols. This depends on the known BS configured CP reception window 201.
2. The end of the unused reception time window cannot be used for radar transmission. Further, a timing margin should be assigned to prevent having the echoes of the radar signal (i.e., the backscatter signal) go into the uplink symbol reception window 203 of the BS and for radar transmission timing (risk of being late) uncertainties. If the radar transmission power or timing uncertainty increase, the length of the radar transmission window decreases since more margin is required.
3. The beginning of the unused CP reception window 201 needs to have a margin assigned to accommodate radar transmission timing uncertainties (risk of being early).

The duration of the radar transmission window during a CP period can be formulated as:Radar window = CP_length - Radar transmission_timing_uncertainly - multi-path delay spread threshold (of the radar)

Since the calculated margin for uplink radar sensing results in a low risk of interference at the BS and causes no interference at the UEs, the transmission power of the radar signal can be leveraged based on the margins assigned. This allows the UE-R to have a variable radar sensing range and makes it easier to detect backscattered signals. The radar transmission must not impact the BS Automatic Gain Control (AGC) for UL communication. If the AGC is digitally controlled, it could base its decisions only on the information within the symbol reception window 203, thus ignoring strong radar pulses which occur within assigned radar operation window 215.

In another aspect of some but not necessarily all embodiments consistent with the invention, a switch is introduced in the UE-R's signal path, for instance at the LNA output, with the output is shorted to produce almost no output signal when outside the symbol reception window 203. This would prevent saturation of the receiver that would otherwise occur due to strong radar pulses if the AGC has set the gain high.

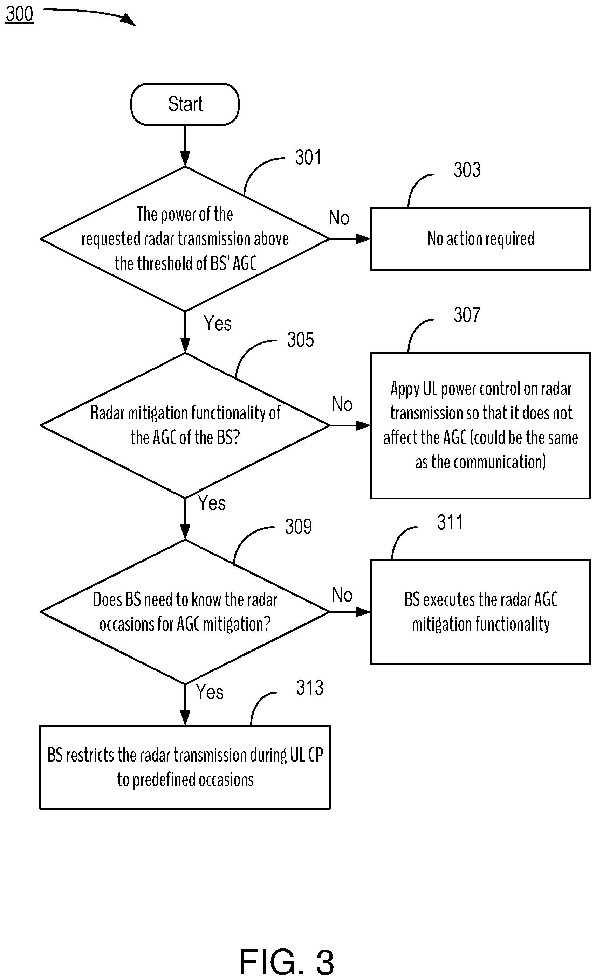

In another aspect of some but not necessarily all embodiments consistent with the invention, BS radar AGC mitigation can be a BS capability that is applied during radar transmissions in the UL CP. Such mitigation needs to be coordinated with the occurrence of radar transmission. If the BS lacks AGC mitigation capability, power control of the radar transmission may be needed (and could, for example, be based on regular communication or actual radar transmission). To illustrate these aspects, Figure 3 is, in one respect, a flowchart of actions performed by the system in accordance with a number of embodiments. In other respects, the blocks depicted in Figure 3 can also be considered to represent means 300 (e.g., hardwired or programmable circuitry or other processing means) for carrying out the described actions.

As shown beginning in Figure 3, the process includes deciding whether the power of the requested radar transmission is above a predefined threshold value of the base station's AGC circuitry (decision block 301). If it is not ("No" path out of decision block 301), then no action is required (step 303).

If the power of the requested radar transmission is above the predefined threshold value of the base station's AGC circuitry ("Yes" path out of decision block 301) it is determined whether the base station has the capability of mitigating the effects of radar transmissions on the base station's AGC functionality (decision block 305). If not ("No" path out of decision block 305), then the UE-R should apply uplink power control on its radar transmissions (step 307) to prevent those transmissions from affecting the AGC functionality. The uplink power control applied to radar transmissions is, in some but not necessarily all inventive embodiments, based on power control information derived during uplink communication activity.

If the base station is capable of mitigating the affects of radar transmissions on its AGC functionality ("Yes" path out of decision block 305), then it is decided whether the base station needs to know the timing of the radar transmission occasions in order to perform the AGC mitigation (decision block 309). If such information is not required ("No" path out of decision block 309), then the base station executes the radar AGC mitigation functionality (step 311).

But if the timing of the radar transmission occasions needs to be known and applied as part of the AGC mitigation ("Yes" path out of decision block 309), then the base station decides in which one(s) of the possible radar operation windows radar transmission will be permitted to occur, and accordingly restricts the radar transmission during the uplink CP to those predefined occasions (step 313).

It can be seen that the UE-R's ability to properly configure placement of a radar operation window 215 and to avoid experiencing interference from other devices is facilitated by having information about its operating environment (e.g., distance to a base station and to other UEs in the environment, related timing of such devices, etc.). To this end, the UE-R 101 in some but not necessarily all inventive embodiments asks the network to provide information about the UL radio resources of the other UEs so that it can perform frequency filtering/matched filtering to mitigate the UL interference of the other UEs during the backscattered signal reception.

A precise placement of the radar signal within the CP period creates better margins for radar transmissions and interference avoidance. In one embodiment, a radar-enabled UE's improved timing capability increases the precision and margins of the closed-loop timing control for better radar timing at the BS receiver. Enablers for efficient radar sensing during a CP-based radar operation window 215 include:
1. A more precise timing capability for the radar-enabled UE (Rx to Tx timing) than the timing capability specified by 3GPP standardization (called "timing error limit value", "Tₑ") as part of the TA control loop for communication. The Tₑ parameter relates to a UE's capability with respect to correct UL transmission timing relative a tracked DL transmission received at the UE. The parameter is expressed as a plus/minus error window within which the UE's timing error must fall. In practice, a radar-enabled UE 101 will typically have a superior relative Rx to Tx timing precision since it is an inherent property for accurate radar sensing.
2. A more precise radar-enabled UE's TA command setting accuracy than that which is specified by 3GPP standardization for communication (i.e., a UE capability).
3. Higher resolution TA command signals from the network to the radar-enabled UE device than those specified by 3GPP for communication.
4. More frequent TA commands from the network to more accurately capture channel delay variation.

A more accurate closed loop control for uplink timing allows the network to fine tune the ideal position of the received radar transmission within the CP reception window 201. The measured uplink timing can be based on measured communication in the uplink, measured timing of radar signals or both.

In some but not necessarily all inventive embodiments, the base station (e.g., gNB) can assign allowed symbols in which radar during CP is allowed. This aspect can advantageously be used to avoid the risk of interference to critical symbols like control signals or to restrict radar operation to symbols with a larger CP. The start and stop of the allowed radar operation window 215 can be derived either by the UE-R 101 or the BS 107 and can change dynamically during operation if conditions change. The accuracy of the TA value used in the TA operation depends on aspects of the BS technology (e.g., RX/UL timing measurement), TA command resolution (related to BS measurement accuracy and UE TA setting accuracy), UE tracking (RX/DL to TX/UL), and UE TA command setting accuracy. All of these are part of the TA control loop.

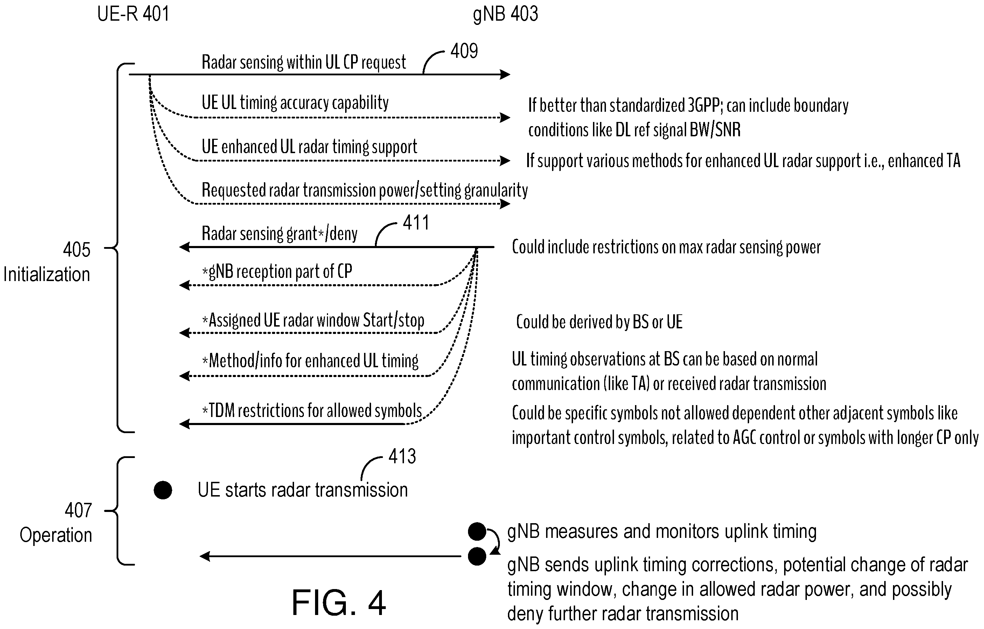

Turning now to another aspect of some but not necessarily all inventive embodiments, Figure 4 is a signaling diagram illustrating how a UE-R 401 interacts with a base station (in this example, illustrated as the gNB 403) with respect to a radar operation. The signaling can be divided into two stages: an initialization phase 405, and an operation phase 407. The initialization phase can include the following signal exchange:
- The UE-R 401 sends a request 409 to perform radar sensing within UL CP. The UE-R 401 can also send any combination (or none) of the following information to support the request:
   ∘ information about UE UL timing accuracy capability (i.e., whether the UE's UL timing accuracy is better than the standardized 3GPP performance and in relation to boundary conditions like downlink reference signal characteristics, bandwidth (BW) and/or signal-to-noise ratio (SNR)). The gNB 403 can use this and other information as a basis for determining expected timing accuracy.
   ∘ information indicating whether the UE-R 401 supports various methods for enhanced UL radar support (e.g., enhanced TA capability)
   ∘ a requested radar transmission power / setting granularity
- In response to the request, the gNB 403 communicates a response 411 indicating whether the radar sensing request is granted or denied. In an aspect of some but not necessarily all inventive embodiments, the request can be granted but with restrictions on the allowable level of radar transmission power. In further aspects, the response 411 can additionally indicate any one or more (or none) of the following:
   ∘ the gNB reception part of the CP reception window 201 to be used
   ∘ the assigned start / stop times of the assigned UE radar operation window 215
   ∘ a method to be used, or other information pertaining to enhanced UL timing
   ∘ restrictions on which time division multiplexing symbols are allowed to be used for CP-based radar operations

In the operation phase 407, the UE-R 401 starts a radar transmission 413. The gNB 403 measures and monitors uplink timing 415 and improves radar performance by then communicating information to the UE-R 401 indicating any one or more of:
- uplink timing corrections
- a potential change of the radar operation window 215
- a change in the allowed power level for radar transmissions
- possible denial of further radar transmissions

In yet another aspect of some but not necessarily all inventive embodiments, different radar transmission beam directions can have individual and optimized transmission timings to fall within respective CP periods of different UEs received at different beams of the BS. The BS may use this information when granting or denying radar transmission during the uplink CP period.

In still another aspect of some but not necessarily all inventive embodiments, a radar-enabled UE may adapt its power during the radar sensing to further reduce the possibility of causing interference at the network. For example, when timing is less accurate, the UE-R can allocate less power for radar transmissions.

In yet another aspect of some but not necessarily all inventive embodiments, the radar-enabled UE may interfere with the uplink transmissions of one or more neighboring BSs (e.g., if the UE-R is close to the edge of the cell). Under such circumstances, the UE-R might also need to coordinate with the CP uplink period of some of the neighboring cell's UEs.

The discussion will now focus on another class of embodiments consistent with the invention, in which radar sensing is performed during a downlink phase of TDD operation.

Similar to using the CP period for radar transmission in uplink, a radar-enabled UE can also use the CP period of DL symbols for radar transmission. An important aspect for avoiding DL interference is to consider the CP timings at potential victim UEs when performing radar transmission. The principles for doing this are very similar to those discussed above with respect to radar operations configured to occur during the uplink phase of TDD operation. Performing radar operations during the DL phase differs from performance during the UL phase in that the CP timings that need to be considered are variable and differ across the victim UEs. Accordingly, radar transmission timing during the DL phase of TDD operation depends factors that include:
1. The downlink propagation delay from the BS towards the victim UEs.
2. The radar propagation delay between the UE-R 101 and the victim UEs.

The situation is illustrated in Figure 5A, which depicts a UE-R 501 in a cell that also includes first and second UEs 503, 505. All three of the devices are served by a base station 507. The UE-R 501 is to transmit a radar signal 509 in order to sense its environment which, merely for purposes of illustration, include an object 511. A backscatter signal 513 is reflected off of the object 511.

As with the case of operation during the UL phase of TDD operation, in the DL phase the length of the CP depends on the subcarrier spacing. Figure 5B is a chart showing the relationship between SCS and CP length, as defined by the 3GPP NR standards.

Figure 5C illustrates some of the timing aspects that are relevant to the herein-described technology with respect to radar operation during the downlink phase of TDD operation. Taking the arrangement of devices as shown in Figure 5A as an example, the base station 507 has a downlink timing configuration 515 as shown, in which each CP transmission window 517 is immediately followed by an associated symbol transmission window 519. In order to have each of the BS's downlink transmissions of CP followed by associated symbol arrive at a respective one of the first and second UEs 503, 505 within that UE's allocated CP and symbol reception windows the propagation delay between the base station 507 and each UE 503, 505 is taken into account and this RF propagation delay (521 and 523) can be estimated based on TA or more precisely its NTA/2 part, since NTA specifies how far in advance of the respective UE's timing an UL communication signal from the UE needs to be transmitted in order to arrive essentially on time within a BS's uplink symbol reception window. The reference for estimating the RF propagation delay 521, 523 is the UE's timing of receipt of tracked DL symbols. As mentioned above and discussed further below, the arrival time at the UEs of the base station's transmissions may not perfectly align with a UE's CP 525, 529 and symbol 527, 531 reception windows. In addition, although the NTA/2 is used as a DL RF propagation delay estimate, it includes errors. But ignoring these additional factors for the moment, it can be seen that the UE1's 503 distance from the base station 507 is greater than that of the UE2's 505. Consequently, the RF propagation delay 521 from the BS 507 to the UE1 503 is greater than the RF propagation delay 523 from the BS 507 to the UE2 505.

Given the arrangement of Figure 5C, embodiments consistent with the invention are configured to have the UE-R's 501 radar pulses/signals 509 transmitted at a time such that, as illustrated in Figure 5C, those signals will arrive at each of the first and second UEs 503, 505 within those devices' respective CP reception windows 525, 529 of an OFDM symbol and outside the respective symbol reception windows 527, 531 for the OFDM symbol.

As Figure 5C illustrates, for any given UE, placement of the radar signal 509 within that UE's CP reception window 525, 529 is dependent, at least in part, on the propagation delay from the base station to the UE. The same is true for the UE-R 501 as well, which means that a UE-R 501 operated to perform sensing during the nearby UE's respective downlink CP reception window 525, 529 needs to obtain its own estimates of the propagation delay between itself and those other devices.

In another aspect of some but not necessarily all inventive embodiments, the radar-enabled UE 501 can derive the CP aligned radar transmission timing based on:
1. Assuming that the victim UE is nearby and has similar channel characteristics to that of the radar-enabled UE 501, the radar-enabled UE 501 can use its estimated DL RF propagation delay as the propagation delay of the victim UE 503, 505. For more than one victim UE, all of them need to satisfy the mentioned conditions, otherwise, the radar transmission will be misaligned with the CP reception periods 525, 529 and interfere with the communication signal at the UEs 503, 505.
   In practice, this assumption is valid if:
   a. The victim(s) is/are in close vicinity to the UE-R 501 and thereby experience(s) the same DL RF propagation delay. The planned sensing rage (i.e., the range of distances from the radar UE 501 to the victim UEs 503, 505, where its radar transmission may create interference, should be "short" in relation to the CP length.
   b. The radar-enabled UE 501 controls its transmission power so that only the close-range UEs 503, 505 (i.e., those satisfying the above constraint) are affected. (Assuming the radar-enabled UE does not know about and consequently adapt to known TDM based DL scheduling, DL timing and radar propagation delays for specific UEs)
   Under this assumption, the radar-enabled UE 501 may perform radar transmissions during its local CP timing minus timing estimation margins. In some but not necessarily all inventive embodiments, these margins are a sum of the radar-enabled UE's timing error and a typical UE's assumed timing error. In one embodiment, the radar-enabled UE 501 may further consider the channel dispersion and increase the margins for larger dispersion estimates, as the OFDM symbol timing estimation is inherently less accurate. (By assuming that close UEs have similar channel properties and a short delay for the interference path).
2. Using information about propagation delay through victim's accumulated NTA (i.e., the 3GPP-defined dynamic part of TA corresponding to Round Trip Time (RTT) RF propagation delay) or, more precisely, accumulated NTA/2 as a measure of reception delay with respect to BS transmit timing. The network or the victim UEs 503, 505, using an established side link or communication via network, can provide the radar-enabled UE 501 with values for accumulated NTA/2 of the nearby victim UEs 503, 505, including information about used reception windows. The accumulated NTA only provides a range representing RF path delay to the BS, but does not indicate the UE-R's azimuth with respect to the BS, and therefore does not give any guidance regarding the actual RF path delay between the aggressor UE-R and its potential victims (e.g., UE1 / UE2), nor does it indicate the potential pathloss that can mitigate interference. The network can assist in this respect by providing further information about close proximity UEs (e.g., through spatial information from beam forming (Angle of Arrive - "AoA"), such as positioning data of these devices) that can be used by the UE-R 501 to filter out and limit candidate victim UEs related to radar power levels used.

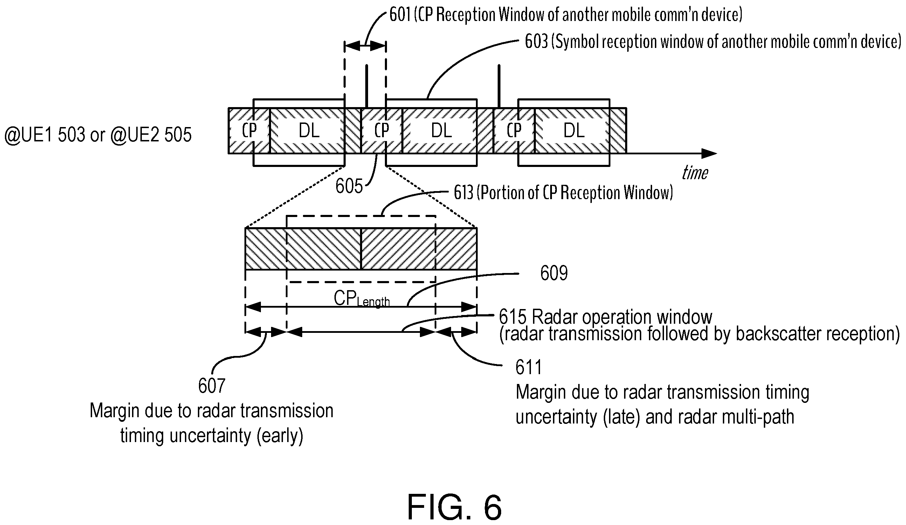

The above-described aspects are illustrated in Figure 6, which is a timing diagram showing how corresponding timing error margins can be applied to the radar signal timing in order to avoid overlapping with the downlink transmission of the base station 507 when received by another UE 503, 505. In particular, consider a UE's (e.g., UE1 503 or UE2 505) CP reception window 601 followed by a symbol reception window 603 (both occurring during the downlink phase of TDD operation). Due to timing estimation errors and channel characteristics, the CP and symbol reception windows 601, 603 may not exactly align with the ideal CP and symbol reception timing. To illustrate this point, the symbol reception window 603 includes a part of the received CP 605. Thus, the end portion of the CP 605 is actually received during a beginning part of the symbol reception window 603 and is not available for radar transmission. If the UE-R 501 had transmitted a radar signal with the expectation that it would be received during an end portion of the CP reception window, that signal would then actually arrive during the beginning part of the symbol reception window 603 if the UE-R's estimation of the propagation delay between itself and the other UE were too low.

Therefore, it is advantageous to further provide a margin 607 at the beginning and end of the CP's length 609 to account for uncertainties about the victim UE's symbol reception window (603) relative to the UE-R's DL timings and uncertainties about the propagation delay estimates between the UE-R and a victim that could otherwise cause radar-related interference to occur within a victim UE's symbol reception windows. The margin 611 can be reduced in some embodiments by taking into account that radar transmission (which is the source of the interference) occurs in a beginning part of the radar operation window 615 (at least for pulse based radar). Avoiding transmission of the radar signal during the two margins 607 and 611 leaves a portion 613 of the CP reception window 601 usable as a radar operation window 615 during which the radar operation (i.e., transmission of the radar signal and reception of the backscatter signal) should be performed.

In another aspect of some but not necessarily all inventive embodiments, different beams of the radar-enabled UE 501 may face different victim UEs, hence, the radar transmission of each beam can be individually tuned to align with the DL CP period of the corresponding victim UEs. For example, the radar-enabled UE may choose to sense through a specific beam that observes a group of close UEs, which are likely to have a similar channel condition.

In yet another aspect of some but not necessarily all inventive embodiments, DL transmissions from the network to the other UEs may affect the backscattered signal reception of the radar-enabled UE 501 when it sends radar signals during a DL CP period. The radar-enabled UE 501 may choose to operate the radar only when the radar range is below a threshold, so the backscattered signal will have a sufficient SNR for detection.

The discussion will now focus on sensing period selection. Radar sensing within a CP period during uplink or downlink phases of TDD depends on the operation mode of the radar-enabled UE 101, 501. Since more accurate CP timing at the radar-enabled UE is possible during the uplink phase of TDD operation, the radar-enabled UE 101, 501 can use the UL phases for longer range surveillance compared to DL phases, and it can use DL phases for relatively shorter sensing range (e.g., high resolution close objects). Also, the UE-R 101, 501 can combine information from sensing in both the UL and DL phases for more flexibility.

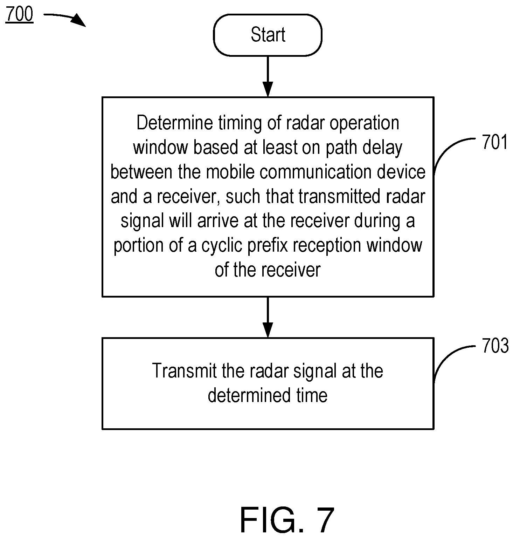

To facilitate a further understanding of aspects of some but not necessarily all inventive embodiments, these are illustrated in Figure 7, which is, in one respect, a flowchart of actions performed by a UE-R 101, 501 in accordance with a number of embodiments. In other respects, the blocks depicted in Figure 7 can also be considered to represent means 1500 (e.g., hardwired or programmable circuitry or other processing means) for carrying out the described actions.

As shown in Figure 7, a process is illustrated that performs a radar sensing function in a mobile communication device that operates in a Time Division Duplex (TDD) wireless communication system having an air interface that comprises a plurality of uplink symbol times associated with symbols transmitted in an uplink direction and a plurality of downlink symbol times associated with symbols transmitted in a downlink direction. Another aspect of the air interface is that each transmitted symbol from a plurality of transmitted symbols has a corresponding cyclic prefix that is transmitted immediately before the corresponding transmitted symbol, and that is a repetition of an end part of the corresponding transmitted symbol. Cyclic prefixes are well-known in the art and need not be described here further.

Actions included in the process include using information about a path delay between the mobile communication device and a receiver as one of one or more bases to determine a timing of a radar operation window comprising a radar signal transmission time and a radar backscatter reception period (step 701), wherein the determined timing of the radar operation window is configured to cause the radar signal, when transmitted from the mobile communication device at the determined radar signal transmission time, to arrive at the receiver during a portion of a cyclic prefix reception window of the receiver. The radar signal is then transmitted at the determined time (step 703).

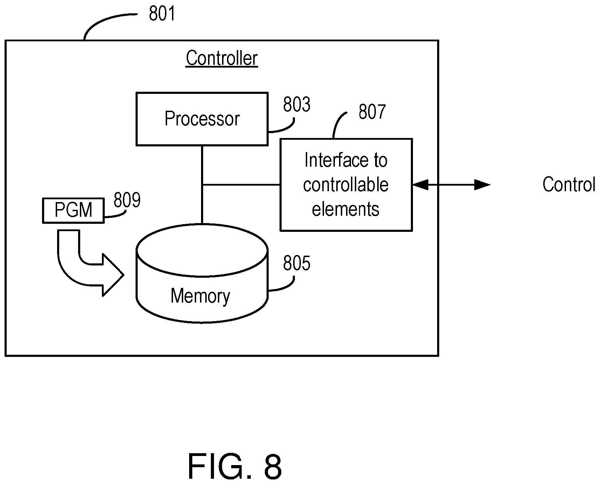

Aspects of an exemplary controller 801 that may be included in a radar-capable mobile communication device 800 to cause any and/or all of the above-described actions to be performed as discussed in the various embodiments are shown in Figure 8, which illustrates an exemplary controller 801 of a mobile communication device 800 in accordance with some but not necessarily all exemplary embodiments consistent with the invention. In particular, the controller 801 includes circuitry configured to carry out any one or any combination of the various functions described above. Such circuitry could, for example, be entirely hard-wired circuitry (e.g., one or more Application Specific Integrated Circuits - "ASICs"). Depicted in the exemplary embodiment of Figure 8, however, is programmable circuitry, comprising a processor 803 coupled to one or more memory devices 805 (e.g., Random Access Memory, Magnetic Disc Drives, Optical Disk Drives, Read Only Memory, etc.) and to an interface 807 that enables bidirectional communication with other elements of the mobile communication device 800. The memory device(s) 805 store program means 809 (e.g., a set of processor instructions) configured to cause the processor 803 to control other system elements so as to carry out any of the aspects described above. The memory device(s) 805 may also store data (not shown) representing various constant and variable parameters as may be needed by the processor 803 and/or as may be generated when carrying out its functions such as those specified by the program means 809.

It will be understood from this description and accompanying figures that an aspect of described embodiments includes a radar-enabled UE transmitting radar signals so they will line up with cyclic prefix reception windows of potential victim receivers in order to avoid interference between the mmWave radar sensing and mmWave 5G communication. The principle is applicable during uplink as well as downlink phases of TDD operation.

The technology provides advantages over conventional technology at least in that it provides a way to perform resource efficient radar sensing via the unused period of the uplink/downlink cyclic prefix so that a UE can perform radar sensing without interfering with the communication function of other UEs and of the base station.

The invention has been described with reference to particular embodiments. However, it will be readily apparent to those skilled in the art that it is possible to embody the invention in specific forms other than those of the embodiment described above. Thus, the described embodiments are merely illustrative and should not be considered restrictive in any way. The scope of the invention is defined by the appended claims.

## Claims

1. A method of performing a radar sensing function in a mobile communication device (101, 501) that operates in a Time Division Duplex, TDD, (115, 515) wireless communication system having an air interface that comprises a plurality of uplink symbol times associated with symbols transmitted in an uplink direction and a plurality of downlink symbol times associated with symbols transmitted in a downlink direction, and in which each transmitted symbol from a plurality of transmitted symbols has a corresponding cyclic prefix (205, 525, 529) that is transmitted immediately before the corresponding transmitted symbol, and that is a repetition of an end part of the corresponding transmitted symbol, the method comprising:
using (701) information about a path delay (121, 123, 521, 523) between the mobile communication device (101, 501) and a receiver (103, 105, 107, 503, 505, 507) as one of one or more bases to determine a timing of a radar operation window (215, 615) comprising a radar signal transmission time and a radar backscatter reception period, and
transmitting (703) the radar signal (111, 509) at the determined radar signal transmission time; and **characterized in that**:
the radar operation window (215, 615) has a duration that is shorter than a duration of a cyclic reception window (201, 525, 529) of the receiver (103, 105, 107, 503, 505, 507) and
the determined timing of the radar operation window (215, 615) is configured to cause the radar signal (111, 509), when transmitted from the mobile communication device (101, 501) at the determined radar signal transmission time, to arrive at the receiver (103, 105, 107, 503, 505, 507) during a portion of the cyclic prefix reception window (201, 525, 529) of the receiver (103, 105, 107, 503, 505, 507).

2. The method of claim 1, wherein determining the timing of the radar operation window comprises:
using an uncertainty (207, 211) associated with the information about the path delay (121, 123, 521, 523) as one of the bases to determine the timing of the radar operation window (215, 615).

3. The method of any one of the previous claims, wherein determining the timing of the radar operation window (215, 615) comprises:
using an uncertainty associated with a placement of the cyclic prefix reception window (117, 201, 525, 529, 601) of the receiver or of a symbol reception window (119, 203, 527, 531, 603) of the receiver (103, 105, 107, 503, 505, 507).

4. The method of any one of the previous claims, wherein determining the timing of the radar operation window (215, 615) comprises:
using information about a level of multi-path delay spread experienced at the receiver (103, 105, 107, 503, 505, 507) as one of the bases to determine the timing of the radar operation window (215, 615).

5. The method of any one of the previous claims, wherein the receiver is a network node receiver (107, 207) and the determined time causes the transmitted radar signal (111, 509) to arrive during the portion of the cyclic prefix reception window of the network node receiver (107, 207).

6. The method of any one of the previous claims, wherein determining the timing of the radar operation window (215, 615) comprises:
obtaining information about a timing of a symbol reception window (119, 203, 527, 531, 603) at the receiver (103, 105, 107, 503, 505, 507); and
deriving the timing of the radar operation window (215, 615) and a length of the radar operation window (215, 615) from the received information about the timing of the symbol reception window (119, 203, 527, 531, 603) at the receiver (103, 105, 107, 503, 505, 507) and one or more values of timing uncertainty about a beginning portion of the cyclic prefix reception window (117, 201, 525, 529, 601) of the receiver (103, 105, 107, 503, 505, 507) and an end portion of the cyclic prefix reception window (117, 201, 525, 529, 601) of the receiver (103, 105, 107, 503, 505, 507).

7. The method of any one of the previous claims, wherein the receiver is a receiver of another mobile communication device (103, 105, 203, 205) and the determined time causes the transmitted radar signal to arrive during the portion of the cyclic prefix reception window (615) of said another mobile communication device (103, 105, 203, 205).

8. The method of claim 7, comprising:
using a value of downlink propagation delay from a network node (107, 507) to said another mobile communication device (103, 105, 503, 505) and a value of radar propagation delay between the mobile communication device (101, 501) and said another mobile communication device (103, 105, 503, 505) as at least two bases to determine the timing of the radar operation window (215, 615).

9. The method of claim 8, comprising:
using a value of downlink propagation delay from the network node (107, 507) to the mobile communication device (101, 501) as the value of downlink propagation delay from the network node (107, 507) to said another mobile communication device (103, 105, 503, 505).

10. The method of claim 8, comprising:
obtaining the value of downlink propagation delay from the network node (107, 507) to said another mobile communication device (103, 105, 503, 505) from said another mobile communication device (103, 105, 503, 505).

11. The method of claim 8, comprising:
obtaining the value of downlink propagation delay from the network node (107, 507) to said another mobile communication device (103, 105, 503, 505) from the network node (107, 507).

12. The method of any of claims 7 through 11, comprising:
tuning a direction of a transmission beam based on a timing of a downlink cyclic prefix period of said another mobile communication device (103, 105, 503, 505).

13. The method of any of claims 1 through 6, wherein determining the timing of the radar operation window (215, 615) comprises:
selecting a cyclic prefix transmission window of a symbol transmitted by a network node (107, 507) during one of the downlink time slots when a radar surveillance range is below a predetermined distance threshold; and
selecting a cyclic prefix reception window of a symbol received by the network node (107, 507) during one of the uplink time slots when the radar surveillance range is above the predetermined distance threshold.

14. An apparatus configured for performing a radar sensing function for a mobile communication device (101, 501) and configured to carry out the method of any of claims 1-13.

15. A mobile communication device comprising the apparatus of claim 14.

## Patentansprüche

1. Verfahren zum Durchführen einer Radarerfassungsfunktion in einer mobilen Kommunikationsvorrichtung (101, 501), die in einem drahtlosen Time-Division-Duplex-Kommunikationssystem, TDD-, Kommunikationssystem (115, 515), betrieben wird, die eine Luftschnittstelle aufweist, die eine Vielzahl von Aufwärtsstreckensymbolzeiten umfasst, die in einer Aufwärtsstreckenrichtung übertragenen Symbolen zugeordnet sind, und eine Vielzahl von Abwärtsstreckensymbolzeiten, die in einer Abwärtsstreckenrichtung übertragenen Symbolen zugeordnet sind, und in dem jedes übertragene Symbol aus einer Vielzahl übertragener Symbole ein entsprechendes zyklisches Präfix (205, 525, 529) aufweist, das unmittelbar vor dem entsprechenden übertragenen Symbol übertragen wird und das eine Wiederholung eines Endteils des entsprechenden übertragenen Symbols ist, wobei das Verfahren umfasst:
Verwenden (701) von Informationen über eine Pfadverzögerung (121, 123, 521, 523) zwischen der mobilen Kommunikationsvorrichtung (101, 501) und einem Empfänger (103, 105, 107, 503, 505, 507) als eine von einer oder mehreren Grundlagen zum Bestimmen eines Zeitpunkts eines Radarbetriebsfensters (215, 615), das eine Radarsignalübertragungszeit und eine Radarrückstreuempfangsperiode umfasst, und
Übertragen (703) des Radarsignals (111, 509) zu der bestimmten Radarsignalübertragungszeit; und **dadurch gekennzeichnet, dass**:
das Radarbetriebsfenster (215, 615) eine Dauer aufweist, die kürzer ist als eine Dauer eines zyklischen Empfangsfensters (201, 525, 529) des Empfängers (103, 105, 107, 503, 505, 507), und
der bestimmte Zeitpunkt des Radarbetriebsfensters (215, 615) dazu konfiguriert ist zu bewirken, dass das Radarsignal (111, 509), wenn es von der mobilen Kommunikationsvorrichtung (101, 501) zu der bestimmten Radarsignalübertragungszeit übertragen wird, während eines Abschnitts des zyklischen Präfix-Empfangsfensters (201, 525, 529) des Empfängers (103, 105, 107, 503, 505, 507) bei dem Empfänger (103, 105, 107, 503, 505, 507) ankommt.

2. Verfahren nach Anspruch 1, wobei das Bestimmen des Zeitpunkts des Radarbetriebsfensters umfasst:
Verwenden einer Unsicherheit (207, 211), die den Informationen über die Pfadverzögerung (121, 123, 521, 523) zugeordnet ist, als eine der Grundlagen zum Bestimmen des Zeitpunkts des Radarbetriebsfensters (215, 615).

3. Verfahren nach einem der vorstehenden Ansprüche, wobei das Bestimmen des Zeitpunkts des Radarbetriebsfensters (215, 615) umfasst:
Verwenden einer Unsicherheit, die einer Platzierung des zyklischen Präfix-Empfangsfensters (117, 201, 525, 529, 601) des Empfängers oder eines Symbolempfangsfensters (119, 203, 527, 531, 603) des Empfängers (103, 105, 107, 503, 505, 507) zugeordnet ist.

4. Verfahren nach einem der vorstehenden Ansprüche, wobei das Bestimmen des Zeitpunkts des Radarbetriebsfensters (215, 615) umfasst:
Verwenden von Informationen über einen Grad der Mehrwegeverzögerungsausbreitung, die an dem Empfänger (103, 105, 107, 503, 505, 507) auftritt, als eine der Grundlagen zum Bestimmen des Zeitpunkts des Radarbetriebsfensters (215, 615).

5. Verfahren nach einem der vorstehenden Ansprüche, wobei der Empfänger ein Netzwerkknotenempfänger (107, 207) ist und die bestimmte Zeit bewirkt, dass das übertragene Radarsignal (111, 509) während des Abschnitts des zyklischen Präfix-Empfangsfensters des Netzwerkknotenempfängers (107, 207) ankommt.

6. Verfahren nach einem der vorstehenden Ansprüche, wobei das Bestimmen des Zeitpunkts des Radarbetriebsfensters (215, 615) umfasst:
Erhalten von Informationen über einen Zeitpunkt eines Symbolempfangsfensters (119, 203, 527, 531, 603) an dem Empfänger (103, 105, 107, 503, 505, 507); und
Ableiten des Zeitpunkts des Radarbetriebsfensters (215, 615) und einer Länge des Radarbetriebsfensters (215, 615) aus den empfangenen Informationen über den Zeitpunkt des Symbolempfangsfensters (119, 203, 527, 531, 603) an dem Empfänger (103, 105, 107, 503, 505, 507) und einem oder mehreren Werten der Zeitpunktunsicherheit über einen Anfangsabschnitt des zyklischen Präfix-Empfangsfensters (117, 201, 525, 529, 601) des Empfängers (103, 105, 107, 503, 505, 507) und einen Endabschnitt des zyklischen Präfix-Empfangsfensters (117, 201, 525, 529, 601) des Empfängers (103, 105, 107, 503, 505, 507).

7. Verfahren nach einem der vorstehenden Ansprüche, wobei der Empfänger ein Empfänger einer anderen mobilen Kommunikationsvorrichtung (103, 105, 203, 205) ist und die bestimmte Zeit bewirkt, dass das übertragene Radarsignal während des Abschnitts des zyklischen Präfix-Empfangsfensters (615) der anderen mobilen Kommunikationsvorrichtung (103, 105, 203, 205) ankommt.

8. Verfahren nach Anspruch 7, umfassend:
Verwenden eines Werts der Abwärtsstreckenausbreitungsverzögerung von einem Netzwerkknoten (107, 507) zu der anderen mobilen Kommunikationsvorrichtung (103, 105, 503, 505) und eines Werts der Radarausbreitungsverzögerung zwischen der mobilen Kommunikationsvorrichtung (101, 501) und der anderen mobilen Kommunikationsvorrichtung (103, 105, 503, 505) als mindestens zwei Grundlagen zum Bestimmen des Zeitpunkts des Radarbetriebsfensters (215, 615).

9. Verfahren nach Anspruch 8, umfassend:
Verwenden eines Werts der Abwärtsstreckenausbreitungsverzögerung von dem Netzwerkknoten (107, 507) zu der mobilen Kommunikationsvorrichtung (101, 501) als der Wert der Abwärtsstreckenausbreitungsverzögerung von dem Netzwerkknoten (107, 507) zu der anderen mobilen Kommunikationsvorrichtung (103, 105, 503, 505).

10. Verfahren nach Anspruch 8, umfassend:
Erhalten des Werts der Abwärtsstreckenausbreitungsverzögerung von dem Netzwerkknoten (107, 507) zu der anderen mobilen Kommunikationsvorrichtung (103, 105, 503, 505) von der anderen mobilen Kommunikationsvorrichtung (103, 105, 503, 505).

11. Verfahren nach Anspruch 8, umfassend:
Erhalten des Werts der Abwärtsstreckenausbreitungsverzögerung von dem Netzwerkknoten (107, 507) zu der anderen mobilen Kommunikationsvorrichtung (103, 105, 503, 505) von dem Netzwerkknoten (107, 507).

12. Verfahren nach einem der Ansprüche 7 bis 11, umfassend:
Abstimmen einer Richtung eines Übertragungsstrahls basierend auf einem Zeitpunkt einer zyklischen Abwärtsstreckenpräfixperiode der anderen mobilen Kommunikationsvorrichtung (103, 105, 503, 505).

13. Verfahren nach einem der Ansprüche 1 bis 6,
wobei das Bestimmen des Zeitpunkts des Radarbetriebsfensters (215, 615) umfasst:
Auswählen eines zyklischen Präfix-Übertragungsfensters eines Symbols, das von einem Netzwerkknoten (107, 507) während eines der Abwärtsstreckenzeitschlitze übertragen wird, wenn eine Radarüberwachungsreichweite unter einem vorbestimmten Entfernungsschwellenwert liegt; und
Auswählen eines zyklischen Präfix-Empfangsfensters eines Symbols, das von dem Netzwerkknoten (107, 507) während eines der Aufwärtsstreckenzeitschlitze empfangen wird, wenn die Radarüberwachungsreichweite über dem vorbestimmten Entfernungsschwellenwert liegt.

14. Einrichtung, die zum Durchführen einer Radarerfassungsfunktion konfiguriert ist für eine mobile Kommunikationsvorrichtung (101, 501) und dazu konfiguriert ist, das Verfahren nach einem der Ansprüche 1-13 auszuführen.

15. Mobile Kommunikationsvorrichtung, die die Einrichtung nach Anspruch 14 umfasst.

## Revendications

1. Procédé de réalisation d'une fonction de détection radar dans un dispositif de communication mobile (101, 501) qui fonctionne dans un système de communication sans fil en duplex par répartition dans le temps, TDD, (115, 515) présentant une interface radio qui comprend une pluralité de temps de symbole de liaison montante associés à des symboles transmis dans une direction de liaison montante et une pluralité de temps de symbole de liaison descendante associés à des symboles transmis dans une direction de liaison descendante, et dans lequel chaque symbole transmis parmi une pluralité de symboles transmis présente un préfixe cyclique correspondant (205, 525, 529) qui est transmis immédiatement avant le symbole transmis correspondant, et qui est une répétition d'une partie de fin du symbole transmis correspondant, le procédé comprenant :
l'utilisation (701) d'informations concernant un retard de trajet (121, 123, 521, 523) entre le dispositif de communication mobile (101, 501) et un récepteur (103, 105, 107, 503, 505, 507) comme l'une parmi une ou plusieurs bases pour déterminer une synchronisation d'une fenêtre d'opération radar (215, 615) comprenant un temps de transmission de signal radar et une période de réception de rétrodiffusion radar, et
la transmission (703) du signal radar (111, 509) au temps de transmission de signal radar déterminé ; et **caractérisé en ce que** :
la fenêtre d'opération radar (215, 615) présente une durée qui est plus courte qu'une durée d'une fenêtre de réception cyclique (201, 525, 529) du récepteur (103, 105, 107, 503, 505, 507) et
la synchronisation déterminée de la fenêtre d'opération radar (215, 615) est configurée pour amener le signal radar (111, 509), lorsqu'il est transmis depuis le dispositif de communication mobile (101, 501) au temps de transmission du signal radar déterminée, à arriver au récepteur (103, 105, 107, 503, 505, 507) pendant une partie de la fenêtre de réception de préfixe cyclique (201, 525, 529) du récepteur (103, 105, 107, 503, 505, 507).

2. Procédé selon la revendication 1, dans lequel la détermination de la synchronisation de la fenêtre d'opération radar comprend :
l'utilisation d'une incertitude (207, 211) associée aux informations concernant le retard de trajet (121, 123, 521, 523) comme l'une des bases pour déterminer la synchronisation de la fenêtre d'opération radar (215, 615).

3. Procédé selon l'une quelconque des revendications précédentes, dans lequel la détermination de la synchronisation de la fenêtre d'opération radar (215, 615) comprend :
l'utilisation d'une incertitude associée à un placement de la fenêtre de réception de préfixe cyclique (117, 201, 525, 529, 601) du récepteur ou d'une fenêtre de réception de symbole (119, 203, 527, 531, 603) du récepteur (103, 105, 107, 503, 505, 507).

4. Procédé selon l'une quelconque des revendications précédentes, dans lequel la détermination de la synchronisation de la fenêtre d'opération radar (215, 615) comprend :
l'utilisation d'informations concernant un niveau de propagation de retard multi-trajets rencontré au niveau du récepteur (103, 105, 107, 503, 505, 507) comme l'une des bases pour déterminer la synchronisation de la fenêtre d'opération radar (215, 615).

5. Procédé selon l'une quelconque des revendications précédentes, dans lequel le récepteur est un récepteur de noeud de réseau (107, 207) et le temps déterminé amène le signal radar transmis (111, 509) à arriver pendant la partie de la fenêtre de réception de préfixe cyclique du récepteur de noeud de réseau (107, 207).

6. Procédé selon l'une quelconque des revendications précédentes, dans lequel la détermination de la synchronisation de la fenêtre d'opération radar (215, 615) comprend :
l'obtention d'informations concernant une synchronisation d'une fenêtre de réception de symbole (119, 203, 527, 531, 603) au niveau du récepteur (103, 105, 107, 503, 505, 507) ; et
la dérivation de la synchronisation de la fenêtre d'opération radar (215, 615) et d'une longueur de la fenêtre d'opération radar (215, 615) à partir des informations reçues concernant la synchronisation de la fenêtre de réception de symbole (119, 203, 527, 531, 603) au niveau du récepteur (103, 105, 107, 503, 505, 507) et d'une ou de plusieurs valeurs d'incertitude de synchronisation concernant une partie de début de la fenêtre de réception de préfixe cyclique (117, 201, 525, 529, 601) du récepteur (103, 105, 107, 503, 505, 507) et une partie de fin de la fenêtre de réception de préfixe cyclique (117, 201, 525, 529, 601) du récepteur (103, 105, 107, 503, 505, 507).

7. Procédé selon l'une quelconque des revendications précédentes, dans lequel le récepteur est un récepteur d'un autre dispositif de communication mobile (103, 105, 203, 205) et le temps déterminé amène le signal radar transmis à arriver pendant la partie de la fenêtre de réception de préfixe cyclique (615) dudit autre dispositif de communication mobile (103, 105, 203, 205).

8. Procédé selon la revendication 7, comprenant :
l'utilisation d'une valeur de retard de propagation de liaison descendante depuis un noeud de réseau (107, 507) vers ledit autre dispositif de communication mobile (103, 105, 503, 505) et d'une valeur de retard de propagation radar entre le dispositif de communication mobile (101, 501) et ledit autre dispositif de communication mobile (103, 105, 503, 505) comme au moins deux bases pour déterminer la synchronisation de la fenêtre de fonctionnement radar (215, 615).

9. Procédé selon la revendication 8, comprenant :
l'utilisation d'une valeur de retard de propagation de liaison descendante depuis le noeud de réseau (107, 507) vers le dispositif de communication mobile (101, 501) comme la valeur de retard de propagation de liaison descendante depuis le noeud de réseau (107, 507) vers ledit autre dispositif de communication mobile (103, 105, 503, 505).

10. Procédé selon la revendication 8, comprenant :
l'obtention de la valeur de retard de propagation de liaison descendante depuis le noeud de réseau (107, 507) vers ledit autre dispositif de communication mobile (103, 105, 503, 505) à partir dudit autre dispositif de communication mobile (103, 105, 503, 505).

11. Procédé selon la revendication 8, comprenant :
l'obtention de la valeur de retard de propagation de liaison descendante depuis le noeud de réseau (107, 507) vers ledit autre dispositif de communication mobile (103, 105, 503, 505) à partir du noeud de réseau (107, 507).

12. Procédé selon l'une quelconque des revendications 7 à 11, comprenant :
le réglage d'une direction d'un faisceau de transmission sur la base d'une synchronisation d'une période de préfixe cyclique de liaison descendante dudit autre dispositif de communication mobile (103, 105, 503, 505).

13. Procédé selon l'une quelconque des revendications 1 à 6,
dans lequel la détermination de la synchronisation de la fenêtre d'opération radar (215, 615) comprend :
la sélection d'une fenêtre de transmission de préfixe cyclique d'un symbole transmis par un noeud de réseau (107, 507) pendant l'un des intervalles de temps de liaison descendante lorsqu'une portée de surveillance radar est inférieure à un seuil de distance prédéterminé ; et
la sélection d'une fenêtre de réception de préfixe cyclique d'un symbole reçu par le noeud de réseau (107, 507) pendant l'un des intervalles de temps de liaison montante lorsque la portée de surveillance radar est supérieure au seuil de distance prédéterminé.

14. Appareil configuré pour réaliser une fonction de détection radar
pour un dispositif de communication mobile (101, 501) et configuré pour exécuter le procédé selon l'une quelconque des revendications 1-13.

15. Dispositif de communication mobile comprenant l'appareil selon la revendication 14.
